# FASCICULE DE BREVET EUROPEEN

(11) **EP 3 209 557 B1**
(45) Date de publication et mention de la délivrance du brevet: **26.09.2018**
(21) Numéro de dépôt: 15781649.7
(22) Date de dépôt: 19.10.2015
(51) Int. Cl.: B64C 21/06, B64D 15/04

(54) **SYSTEME AMELIORE POUR LA GESTION DUALE DE L'ANTIGIVRAGE ET DE L'ASPIRATION DE LA COUCHE LIMITE SUR UNE SURFACE PORTANTE D'UN AERONEF**
VERBESSERTES SYSTEM ZUR DOPPELTEN VERWALTUNG VON VEREISUNGSSCHUTZ UND GRENZFLÄCHENABSAUGEN AUF DER TRAGFLÄCHE EINES FLUGZEUGS
IMPROVED SYSTEM FOR THE DUAL MANAGEMENT OF ANTI-ICING AND BOUNDARY-LAYER SUCTION ON AN AEROFOIL OF AN AIRCRAFT

(30) Priorité: 20.10.2014 BE 201405019
(43) Date de publication de la demande: 30.08.2017
(73) Titulaire: Sonaca S.A., 6041 Gosselies (BE)
(72) Inventeur: GUEUNING, Dimitri, B - 1330 Rixensart (BE); DEBAISIEUX, Stéphane, B - 1495 Sart-Dames-Avelines (BE)
(74) Mandataire: Brevalex
(86) Numéro de dépôt international: PCT/EP2015/074088
(87) Numéro de publication internationale: WO 2016/062645

(56) Documents cités:
- EP-A2- 0 436 243
- EP-A2- 0 836 989
- US-A- 3 093 350
- US-A- 5 348 256
- US-B2- 7 673 832

## Description

### DOMAINE TECHNIQUE

La présente invention se rapporte au domaine de la gestion de la fonction antigivrage d'une surface portante d'un aéronef, et de la gestion de l'aspiration de la couche limite sur cette même surface portante.

Les surfaces portantes concernées sont de préférence les ailes ou l'empennage de l'aéronef.

L'invention s'applique à tous les types d'aéronefs, en particulier les avions commerciaux.

### ÉTAT DE LA TECHNIQUE ANTÉRIEURE

De l'art antérieur, il est connu des systèmes d'antigivrage d'ailes d'avions, comprenant des canaux à travers lesquels circule de l'air chaud prélevé sur les moteurs, pour éviter la formation de givre sur les ailes. Les principales phases de vol durant lesquelles un tel système est actionné sont le décollage, l'atterrissage, ou encore l'attente d'atterrissage.

De l'art antérieur, il est également connu des systèmes d'aspiration de la couche limite sur les ailes. Cette aspiration est réalisée à l'aide de canaux délimités en partie par la peau extérieure de l'aile, qui est multiperforée pour permettre l'aspiration. Celle-ci a pour but de diminuer la trainée des ailes. Elle est essentiellement mise en oeuvre durant la phase de croisière, également dénommée « cruise ».

Sur l'aile, les canaux d'antigivrage et les canaux d'aspiration de la couche limite peuvent être agencés en alternance. Néanmoins, dans certaines zones de la surface portante comme par exemple le nez du bord d'attaque, il peut y avoir un intérêt à assurer alternativement la fonction d'antigivrage, et celle d'aspiration de la couche limite. Ce besoin peut conduire à la mise en oeuvre d'un ou plusieurs conduits à double fonction, dans lesquels peut alternativement circuler de l'air d'antigivrage et de l'air pour l'aspiration de la couche limite. Ce type de réalisation est par exemple connu du document US 7 673 832.

Néanmoins, la solution décrite dans ce document nécessite un nombre important de conduits d'air et de vannes commandées, qui impactent sensiblement l'encombrement et la masse globale du système. De plus, la commande électrique de la totalité des vannes nuit à la fiabilité de ce système de gestion duale de la fonction antigivrage et d'aspiration de la couche limite.

Le système connu du document EP 0 436 243 présente lui aussi des canaux à double fonction soit pour air d'antigivrage, soit pour aspiration de la couche limite, lesdits canaux étant en partie délimités par une paroi multiperforée. Une conduite principale à double fonction reliée aux canaux est relié à des dispositifs de contrôle séparés pour les deux fonctions.

### EXPOSÉ DE L'INVENTION

L'invention a ainsi pour but de remédier au moins partiellement aux inconvénients relatifs aux réalisations de l'art antérieur.

Pour ce faire, l'invention a tout d'abord pour objet un système d'antigivrage et d'aspiration de la couche limite, destiné à équiper une surface portante d'un aéronef, le système comprenant au moins un canal à double fonction dans lequel peut alternativement circuler de l'air pour la fonction d'antigivrage et de l'air pour l'aspiration de la couche limite, ledit canal à double fonction étant en partie délimité par une paroi multiperforée permettant l'aspiration de la couche limite sur ladite surface portante,

le système comprenant :
- un dispositif de contrôle de l'aspiration de la couche limite ;
- un dispositif de contrôle d'antigivrage ;
- une conduite principale à double fonction, à laquelle sont reliés le dispositif de contrôle de l'aspiration de la couche limite, et le dispositif de contrôle d'antigivrage ;
- un conduit d'admission d'air d'antigivrage permettant la communication entre la conduite principale et le canal à double fonction ;
- un premier clapet anti-retour autorisant uniquement le passage de l'air d'antigivrage de la conduite principale vers le conduit d'admission d'air d'antigivrage ;
- au moins un conduit de collecte d'air d'aspiration permettant la communication entre le canal à double fonction et la conduite principale ; et
- un second clapet anti-retour autorisant uniquement le passage de l'air d'aspiration du conduit de collecte d'air d'aspiration, vers la conduite principale.

L'invention est remarquable en ce qu'elle permet d'aboutir à une masse et un encombrement réduits, tout en améliorant la fiabilité des systèmes existants. Le fait que le conduit d'admission d'air d'antigivrage et le conduit de collecte d'air d'aspiration soient tous deux raccordés au canal à double fonction et à la conduite principale, permet de gérer astucieusement les deux fonctions d'antigivrage et d'aspiration de la couche limite.

En effet, lorsque de l'air d'antigivrage circule dans le conduit d'admission d'air d'antigivrage puis dans le canal à double fonction, il demeure ensuite libre d'emprunter le conduit de collecte d'air d'aspiration. Cependant, l'air d'antigivrage reste avantageusement confiné dans ce conduit de collecte d'air d'aspiration, sans pouvoir rejoindre la conduite principale. Effectivement, bien que le second clapet anti-retour autorise la circulation de l'air dans le sens allant du conduit de collecte d'air d'aspiration vers la conduite principale, l'air d'antigivrage ne peut pénétrer dans cette dernière conduite, en raison de la pression d'air supérieure qui règne à l'intérieur de celle-ci. En d'autres termes, l'air d'antigivrage situé dans la partie aval du conduit de collecte d'air d'aspiration présente une pression plus faible en raison des pertes de charges subies lors de son cheminement au travers successivement du conduit d'admission d'air d'antigivrage, du canal à double fonction, puis du conduit de collecte d'air d'aspiration. La baisse de pression est d'autant plus importante que lors de son passage dans le canal à double fonction, une partie de l'air d'antigivrage est évacuée à travers la multiperforation pratiquée sur ce canal. Le blocage de l'air d'antigivrage en aval du conduit de collecte d'air d'aspiration est ainsi avantageusement obtenu par un simple phénomène physique de différence de pression, de sorte que la fiabilité du système est renforcée, notamment en comparaison d'un système à vannes multiples commandées électriquement.

De plus, l'encombrement et la masse sont réduits, en particulier grâce à la mise en oeuvre de la conduite principale utilisée alternativement pour la gestion des deux fonctions. En effet, la gestion de la fonction d'aspiration de la couche limite s'opère en faisant simplement circuler l'air d'aspiration dans le canal à double fonction, puis dans le conduit de collecte d'air d'aspiration, avant que cet air rejoigne la conduite principale à partir de laquelle il est évacué dans un sens opposé à celui de la circulation de l'air d'antigivrage.

L'invention présente également au moins l'une des caractéristiques optionnelles suivantes, prises isolément ou en combinaison.

Il comporte plusieurs conduits de collecte d'air d'aspiration permettant la communication entre le canal à double fonction et la conduite principale, lesdits conduits de collecte d'air d'aspiration étant espacés les uns des autres le long du canal à double fonction, et il comporte en outre, associé à chaque conduit de collecte d'air d'aspiration, un second clapet anti-retour autorisant uniquement le passage de l'air d'aspiration du conduit de collecte d'air d'aspiration, vers la conduite principale. La multiplication des conduits de collecte d'air d'aspiration permet avantageusement une aspiration plus homogène le long de la direction longitudinale du canal à double fonction.

De préférence, le système comporte de plus :
- une pluralité de canaux d'antigivrage, chaque canal d'antigivrage communiquant avec le conduit d'admission d'air d'antigivrage ;
- un conduit de collecte d'air d'antigivrage communiquant avec les canaux d'antigivrage ;
- un troisième clapet anti-retour autorisant uniquement le passage de l'air d'antigivrage de l'intérieur vers l'extérieur du conduit de collecte d'air d'antigivrage ;
- une pluralité de canaux d'aspiration de la couche limite, chaque canal d'aspiration étant en partie délimité par une paroi multiperforée permettant l'aspiration de la couche limite sur ladite surface portante ;
- au moins un conduit secondaire de collecte d'air d'aspiration permettant la communication entre les canaux d'aspiration de la couche limite, et la conduite principale ; et
- un quatrième clapet anti-retour autorisant uniquement le passage de l'air d'aspiration du conduit secondaire de collecte d'air d'aspiration, vers la conduite principale.

De préférence, le système comprend plusieurs conduits secondaires de collecte d'air d'aspiration permettant la communication entre les canaux d'aspiration de la couche limite, les conduits secondaires de collecte d'air d'aspiration étant espacés les uns des autres le long des canaux d'aspiration, et le système comporte en outre, associé à chaque conduit secondaire de collecte d'air d'aspiration, un quatrième clapet anti-retour autorisant uniquement le passage de l'air d'aspiration du conduit secondaire de collecte d'air d'aspiration, vers la conduite principale. Ici encore, la multiplication des conduits secondaires de collecte d'air d'aspiration permet une aspiration plus homogène le long des canaux d'aspiration.

De préférence, au moins certains des canaux d'antigivrage et des canaux d'aspiration de la couche limite sont agencés en alternance. La disposition spécifique retenue pour ces canaux est bien entendu fonction des besoins rencontrés en termes d'antigivrage et d'aspiration de la couche limite.

De préférence, le système comprend successivement, dans une direction de corde à partir d'un bord d'attaque de la surface portante :
- ledit canal à double fonction ;
- une pluralité desdits canaux d'antigivrage ; puis
- une alternance entre lesdits canaux d'aspiration d'air et les autres canaux d'antigivrage,
lesdits canaux d'antigivrage, canaux d'aspiration d'air et canal à double fonction s'étendant parallèlement les uns aux autres, selon une direction d'envergure de la surface portante.

Alternativement, l'invention pourrait se présenter sous la forme d'un autre type de conception dans laquelle les canaux suivent non pas la direction d'envergure de la surface portante, mais suivent une direction sensiblement orthogonale, dite direction de corde. Dans le premier cas préféré où les canaux suivent sensiblement la direction d'envergure de la surface portante, la conception est dite « concept longitudinal », tandis que dans le second cas, il est fait référence à un « concept corde ».

De préférence, le conduit d'admission d'air d'antigivrage, chaque conduit de collecte d'air d'aspiration, chaque conduit secondaire de collecte d'air d'aspiration et le conduit de collecte d'air d'antigivrage suivent chacun le profil aérodynamique de la surface portante, en étant agencés dans des plans parallèles, espacés les uns des autres selon une direction d'envergure de cette surface portante. En d'autres termes, ces conduits suivent la direction de corde.

De préférence, le système comporte un cinquième clapet anti-retour raccordé à l'extrémité aval du canal à double fonction, selon le sens de circulation de l'air d'antigivrage à travers ce canal à double fonction, le cinquième clapet anti-retour autorisant uniquement le passage de l'air d'antigivrage de l'intérieur vers l'extérieur du canal à double fonction. Le cinquième clapet permet donc, en mode aspiration de couche limite, de s'assurer que l'aspiration se fasse bien par le multiperçage de la peau externe, et non pas par l'orifice principal de sortie associé à ce cinquième clapet.

De préférence, le système est configuré de sorte que l'air d'antigivrage s'échappant par le cinquième clapet ne circule pas à travers le conduit de collecte d'air d'antigivrage. La ségrégation opérée permet avantageusement d'éviter que l'air d'antigivrage circule essentiellement à travers le canal à double fonction avant d'être évacué par la multiperforation, et ce au détriment de la circulation de l'air dans les canaux d'antigivrage. Pour limiter ce phénomène, il est par exemple prévu que le canal à double fonction présente un orifice principal de sortie d'air d'antigivrage associé au cinquième clapet, que le conduit de collecte d'air d'antigivrage présente un orifice secondaire de sortie d'air d'antigivrage associé au troisième clapet, et que l'orifice principal présente une section plus faible que l'orifice secondaire. Cela permet d'augmenter la pression de l'air d'antigivrage au sein du canal à double fonction, et donc de mieux répartir l'air entre ce canal multiperforé à double fonction, et les canaux d'antigivrage non multiperforés. Ces deux orifices, principal et secondaire, permettent également de calibrer les échanges thermiques convectifs dans les canaux d'antigivrage.

De préférence, le canal à double fonction présente un orifice d'entrée d'air d'antigivrage, dont la section est plus importante que celle de l'orifice principal de sortie d'air d'antigivrage. Cela constitue également un artifice pour augmenter la pression d'air au sein du canal à double fonction.

De préférence, la conduite principale à double fonction s'étend selon une direction d'envergure de la surface portante, et ce que la conception du système soit du type « concept longitudinal » ou « concept corde ».

L'invention a également pour objet une surface portante pour aéronef comprenant au moins un système d'antigivrage et d'aspiration de couche limite, tel que décrit ci-dessus. La surface portante est préférentiellement une aile ou un empennage, de préférence un empennage vertical, ou éventuellement un empennage horizontal.

Enfin, l'invention a aussi pour objet un aéronef comprenant au moins une telle surface portante ou au moins un tel système d'antigivrage et d'aspiration de la couche limite.

D'autres avantages et caractéristiques de l'invention apparaîtront dans la description détaillée non limitative ci-dessous.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des dessins annexés parmi lesquels ;
- la figure 1 représente une vue en perspective d'un avion équipé de deux ailes selon l'invention ;
- la figure 2 représente une vue schématique en coupe transversale d'une partie avant de l'une des ailes de l'avion montré sur la figure précédente, l'aile étant équipée d'un système d'antigivrage et d'aspiration de la couche limite, selon un mode de réalisation préféré de l'invention ;
- la figure 3 est une vue schématique de dessus du système ;
- la figure 4 est une vue en perspective de celle montrée sur la figure 2 ;
- la figure 5 est une vue partielle et agrandie de celle montrée sur la figure précédente, selon un autre angle de perspective ;
- les figures 6a à 7b montrent des vues en perspective représentant les moyens mis en oeuvre pour l'alimentation des canaux d'antigivrage du système, et pour la collecte de l'air d'antigivrage ;
- la figure 8 est une vue similaire à celle de la figure 3, schématisant le fonctionnement du système lors d'une phase d'antigivrage de l'aile ;
- la figure 9 est une vue en perspective de la partie avant de l'aile, schématisant également le fonctionnement du système lors d'une phase d'antigivrage ;
- la figure 10 est une vue en perspective montrant les zones de l'aile bénéficiant de la fonction d'antigivrage ; et
- les figures 11 à 13 représentent respectivement des vues similaires à celles des figures 8 à 10, schématisant le fonctionnement du système lors d'une phase d'aspiration de la couche limite.

### EXPOSÉ DÉTAILLÉ DE MODES DE RÉALISATION PARTICULIERS

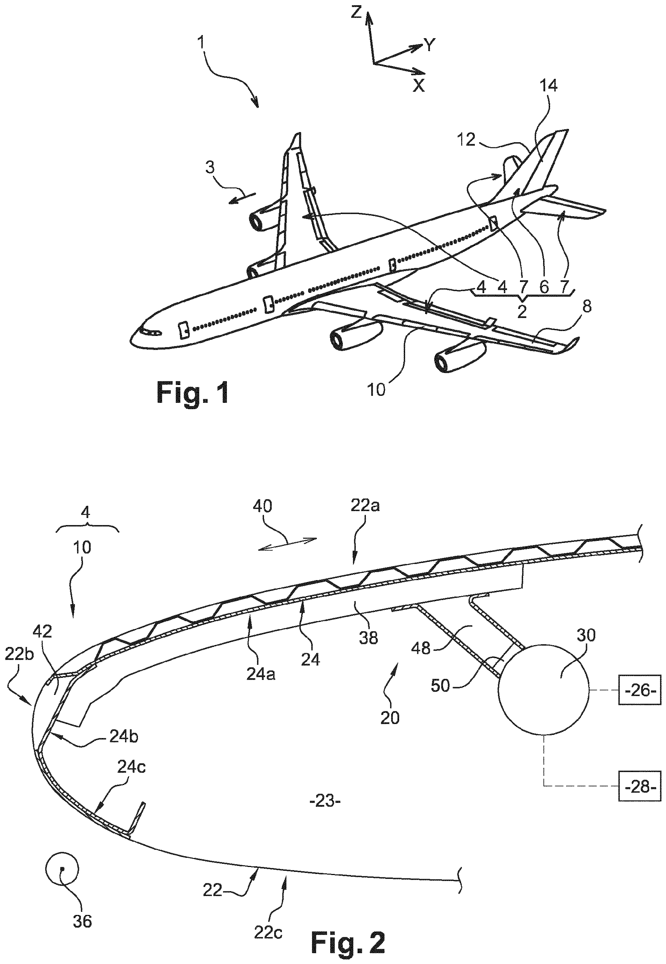

En référence à la figure 1, il est montré un avion 1 du type avion commercial, sur lequel est appliquée la présente invention. De manière classique, l'avion 1 comporte un ensemble 2 de surfaces portantes comprenant deux ailes 4, un empennage vertical 6 également dit « dérive verticale », et deux empennages horizontaux 7. L'invention est particulièrement applicable à la partie avant 10 des ailes 4 et de l'empennage vertical 6, mais peut aussi s'appliquer aux empennages horizontaux 7. A cet égard, il est noté que dans la description, les termes « avant » et « arrière » sont à considérer selon une direction d'avancement 3 de l'avion, suite à la poussée exercée par ses moteurs.

L'invention concerne un système 20 d'antigivrage et d'aspiration de la couche limite sur une surface portante. Dans la description ci-dessous, la surface portante est l'une des ailes 4, et le système 20 est implanté à l'intérieur de la partie avant 10 de cette aile, comprenant le bord d'attaque. Néanmoins, il est noté que l'invention pourrait être appliquée de manière identique ou similaire à l'autre aile 4, ou encore à la partie avant de l'empennage vertical 6.

En référence à la figure 2, il est représenté la partie avant 10 de l'aile intégrant le système 20. La partie avant 10 comprend une peau externe 22 définissant successivement une zone d'extrados 22a, une zone de nez 22b et une zone d'intrados 22c. Par ailleurs, le système 20 comporte une peau interne 24 comprenant également une zone d'extrados 24a, une zone de nez 24b et une zone d'intrados 24c. Les deux zones d'extrados 22a, 24a sont espacées l'une de l'autre de manière à définir une pluralité de canaux de circulation d'air, qui seront détaillés ci-après et qui peuvent être fabriqués de la manière exposée dans le document EP 1 327 489. Les deux zones de nez 22b, 24b sont également espacées l'une de l'autre, de manière à définir entre elles un canal à double fonction, qui sera également décrit ci-dessous. En revanche, les deux zones d'intrados 22c, 24c sont sensiblement plaquées l'une contre l'autre, étant néanmoins précisé que dans cette zone, la peau interne 24 ne s'étend que sur une faible longueur vers l'arrière, comme cela est visible sur la figure 2.

En référence conjointement aux figures 2 à 5, le système 20 de gestion duale de la fonction d'antigivrage et de l'aspiration de la couche limite comporte tout d'abord un dispositif 26, pour le contrôle de l'aspiration de la couche limite. Il s'agit de préférence d'un dispositif conventionnel, du type vanne de régulation commandée électriquement, permettant de réguler le débit d'air destiné à être aspiré par une pompe ou similaire (non représentée). A titre indicatif, il est noté que de manière conventionnelle, la pompe est agencée en dehors de l'aile.

En outre, le système 20 comprend un dispositif 28 de contrôle d'antigivrage, ce dispositif étant également conventionnel, de préférence du type vanne de régulation commandée électriquement. Cette vanne 28, également dénommée WAIV (de l'anglais « Wing Anti-Icing Valve »), permet de réguler le débit d'air chaud prélevé sur les moteurs et injecté entre les peaux externe et interne pour éviter le givrage des zones concernées. Cet air chaud prélevé sur les moteurs est dit « air d'antigivrage ».

Les deux dispositifs 26, 28 sont tous les deux raccordés sur une conduite principale 30 du système 20, cette conduite étant à double fonction étant donné qu'elle est utilisée à la fois durant les phases d'aspiration de la couche limite et durant les phases d'antigivrage, comme cela ressortira clairement ci-après. A titre d'exemple indicatif, le dispositif 26 peut être directement placé sur la conduite principale 30, tandis que le dispositif 28 peut être placé sur une conduite de bifurcation 32 se raccordant à la conduite principale.

La conduite principale 30 est droite, s'étendant parallèlement à la direction 36 de l'envergure de l'aile, dans l'espace libre 23 de la partie avant 10 de l'aile, défini entre les zones d'extrados 22a, 24a et la zone d'intrados 22c. A l'extrémité opposée à celle sur laquelle se trouvent les vannes 26, 28, la conduite principale 30 est obturée.

Comme évoqué ci-dessus, le système 20 comporte une pluralité de canaux de circulation d'air, définis entre les peaux externe 22 et interne 24, et agencés parallèlement à la direction d'envergure 36, en étant sensiblement droits. De l'avant vers l'arrière, il s'agit successivement d'un canal à double fonction 42, d'une pluralité de canaux d'antigivrage adjacents 44, puis d'une alternance entre des canaux d'aspiration d'air 46 et d'autres canaux d'antigivrage 44.

Le canal à double fonction 42 est spécifique puisqu'il est prévu pour y faire circuler alternativement de l'air d'antigivrage, et de l'air pour l'aspiration de la couche limite. Pour la mise en oeuvre de cette seconde fonction, la zone de nez 22b délimitant le canal 42 prend la forme d'une paroi multiperforée permettant l'aspiration de la couche limite, d'une manière connue de l'homme du métier. La peau externe 22 présente ainsi une multiperforation à cet endroit de la zone de nez 22b.

Une telle multiperforation est également prévue sur les parties de la zone d'extrados 22a délimitant les canaux 46 d'aspiration de la couche limite. En revanche, les autres parties de la zone d'extrados de la peau externe 22, délimitant les canaux d'antigivrage 44, sont dépourvues d'une telle multiperforation puisqu'ils ne sont pas dédiés à l'aspiration de la couche limite. Il est noté que la répartition des canaux 42, 44, 46 est ici donnée uniquement à titre d'exemple indicatif, mais que cette répartition peut être adaptée en fonction des besoins spécifiques rencontrés sur chaque surface portante, en termes de d'antigivrage et d'aspiration.

Les canaux 44, 46 présentent de sections de tailles et de formes identiques ou similaires, par exemple de section trapézoïdale. Le canal à double fonction 42, situé au niveau du nez, présente quant à lui une section plus importante, de forme davantage complexe.

Le système 20 comporte par ailleurs une pluralité de conduits permettant de faire communiquer les canaux 42, 44, 46 avec la conduite principale 30. Ces conduits, qui seront décrits ci-après, s'étendent chacun selon une direction de corde 40 en étant agencés dans des plans orthogonaux espacés les uns des autres selon la direction d'envergure 36. Ces conduits ne sont pas droits, mais ils suivent chacun le profil aérodynamique de l'aile en étant logé sous la peau interne 24. Chacun d'eux prend la forme d'un capot ouvert vers le haut et plaqué contre la peau interne 22, celle-ci participant donc également à la formation de ces conduits. Alternativement, au moins certains de ces conduits peuvent être réalisés directement par un conformage particulier de la peau interne 24.

Il s'agit tout d'abord d'un conduit d'admission d'air d'antigivrage 38, raccordé à la conduite principale 30 au plus près de la vanne 28. Plus précisément, ce raccordement s'effectue par un conduit de jonction 48 de faible longueur, situé sur ou à proximité d'une extrémité arrière du conduit 38. Le conduit de jonction 48 est équipé d'un premier clapet anti-retour 50 autorisant uniquement le passage de l'air d'antigivrage de la conduite principale 30, vers le conduit 38. Une communication fluidique dans l'autre sens est ainsi interdite par le clapet 50.

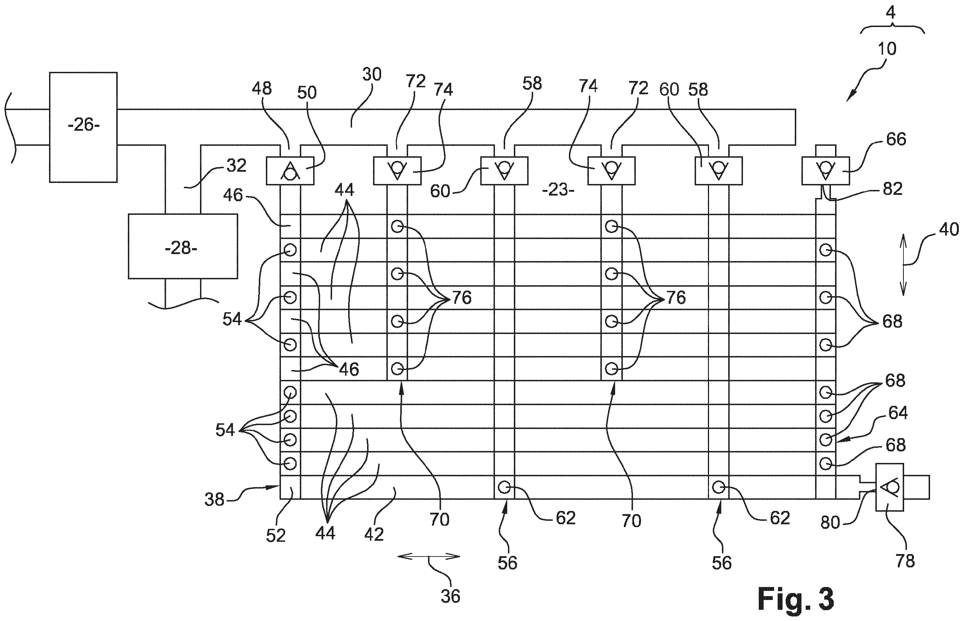

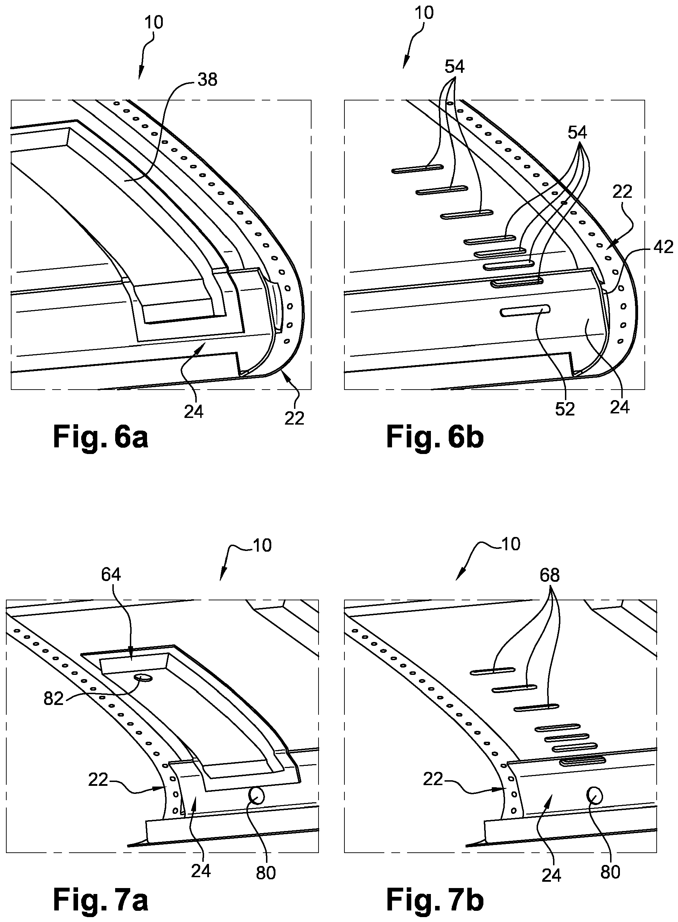

A son extrémité avant, le conduit d'admission d'air d'antigivrage 38 communique avec une première extrémité du canal 42 à double fonction, par le biais d'un orifice d'entrée d'air d'antigivrage 52 pratiqué à travers la peau interne 24. Des orifices analogues 54 sont prévus le long de la direction de corde 40, de manière à assurer la communication entre le conduit 38 et les canaux de d'antigivrage 44. De tels orifices 52, 54 peuvent par exemple être de section circulaire comme cela a été montré de manière schématique sur la figure 3, ou bien de forme oblongue comme cela est visible sur la figure 6b. A cet égard, il est noté que cette figure 6b correspond à la figure 6a, sans le conduit 38 qui a été retiré pour rendre visibles ces orifices 52, 54.

Le système 20 comporte en outre plusieurs conduits de collecte d'air d'aspiration 56, dont deux ont été représentés sur la figure 3. Ces conduits 56 sont chacun raccordé à la conduite principale 30, en aval du conduit 38. Pour chaque conduit 56, le raccordement s'effectue à l'aide d'un conduit de jonction 58 de faible longueur, situé sur ou à proximité d'une extrémité arrière du conduit 56. Le conduit de jonction 56 est équipé d'un second clapet anti-retour 60 autorisant uniquement le passage de l'air d'aspiration du conduit 56 vers la conduite principale 30. Une communication fluidique dans l'autre sens est ainsi interdite par le clapet 60.

A son extrémité avant, chaque conduit de collecte d'air d'aspiration 56 communique avec le canal 42 à double fonction, par le biais d'un orifice d'aspiration 62 pratiqué à travers la peau interne 24.

Les deux conduits de collecte d'air d'aspiration 56 sont espacés l'un de l'autre le long du canal à double fonction 42. Ils sont raccordés à ce dernier en aval du raccordement du conduit 38, au regard d'une direction de circulation de l'air d'antigivrage à travers le canal 42 pendant une phase d'antigivrage.

Le système 20 comporte aussi un conduit de collecte d'air d'antigivrage 64, qui communique avec les canaux d'antigivrage 44 au niveau d'une extrémité de ceux-ci opposée à l'extrémité de raccordement avec le conduit 38. Le conduit 64 est ainsi disposé à l'extrémité de la partie avant 10 de l'aile, opposée à l'extrémité logeant le conduit d'admission d'air d'antigivrage 38.

A son extrémité aval, le conduit de collecte d'air d'antigivrage 64 est équipé d'un troisième clapet anti-retour 66 autorisant uniquement le passage de l'air d'antigivrage de l'intérieur vers l'extérieur de ce conduit 64. Une communication fluidique dans l'autre sens est ainsi interdite par le clapet 66.

La communication entre le conduit 64 et les canaux d'antigivrage 66 s'effectue par le biais d'orifices de collecte d'air d'antigivrage 68, également pratiqués à travers la peau interne 24. Ces orifices 68 sont ainsi agencés à l'extrémité aval des canaux d'antigivrage 44, au regard d'une direction de circulation de l'air d'antigivrage à travers ces canaux 44 pendant une phase d'antigivrage.

De tels orifices 68 peuvent par exemple être de section circulaire comme cela a été montré de manière schématique sur la figure 3, ou bien de forme oblongue comme cela est visible sur la figure 7b. A cet égard, il est noté que cette figure 7b correspond à la figure 7a, sans le conduit 64 qui a été retiré pour rendre visibles les orifices 68.

L'extrémité arrière du conduit 64 débouche dans l'espace libre 23 de la partie avant 10, sans être raccordée à la conduite principale 30.

Le système 20 comporte également plusieurs conduits secondaires de collecte d'air d'aspiration 70, dont deux ont été représentés sur la figure 3. Ces conduits 70 sont chacun raccordé à la conduite principale 30, en aval du conduit 38. Pour chaque conduit 70, le raccordement s'effectue à l'aide d'un conduit de jonction 72 de faible longueur, situé sur ou à proximité d'une extrémité arrière du conduit 70. Le conduit de jonction 72 est équipé d'un quatrième clapet anti-retour 74 autorisant uniquement le passage de l'air d'aspiration du conduit 70 vers la conduite principale 30. Une communication fluidique dans l'autre sens est ainsi interdite par le clapet 74.

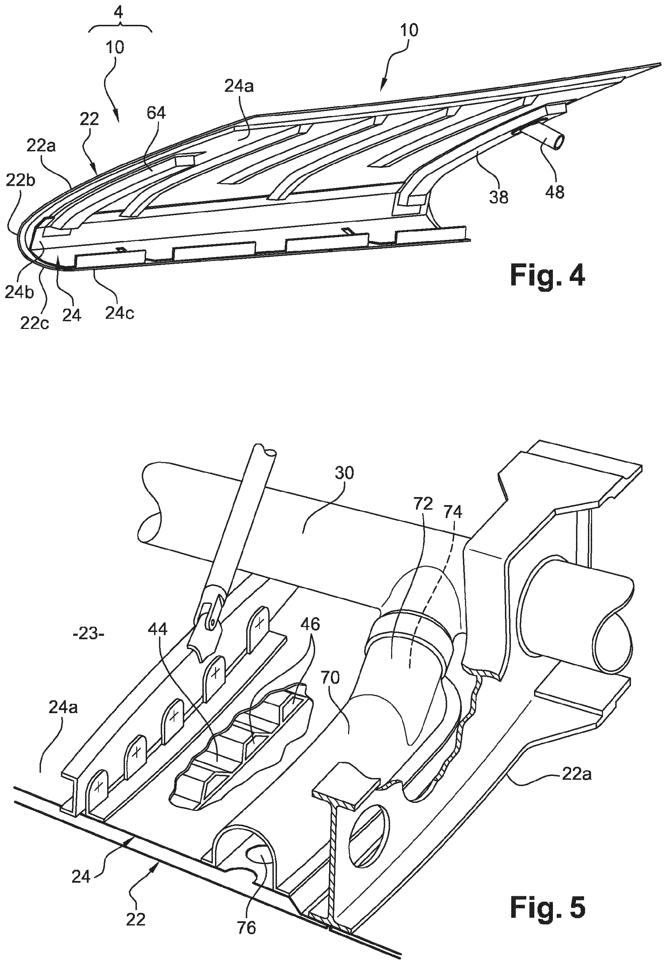

Chaque conduit secondaire de collecte d'air d'aspiration 70 communique avec chacun des canaux d'aspiration 46, par le biais d'orifices secondaires d'aspiration 76 pratiqués à travers la peau interne 24, comme cela est montré sur la vue agrandie de la figure 5.

Les deux conduits de collecte d'air d'aspiration 56 sont espacés l'un de l'autre le long des canaux d'aspiration 46, et sont disposés entre les conduits 38 et 64 de gestion de la fonction d'antigivrage. En outre, ils peuvent être agencés en alternance avec les deux conduits de collecte d'air d'aspiration 56.

Enfin, à l'extrémité aval du canal 42 à double fonction, le système 20 est équipé d'un cinquième clapet anti-retour 78 autorisant uniquement le passage de l'air d'antigivrage de l'intérieur vers l'extérieur de ce canal 42. Une communication fluidique dans l'autre sens est ainsi interdite par le clapet 78, et l'air s'échappant par ce dernier pénètre dans l'espace libre 23 de la partie avant 10, sans transiter par la conduite principale 30 à laquelle l'extrémité aval du canal 42 n'est pas raccordée. De plus, cette extrémité aval du canal à double fonction 42 n'est pas non plus raccordée au conduit de collecte d'air d'antigivrage 64, de sorte que l'air s'échappant par le clapet 78 ne transite pas non plus par ce conduit 64.

Toujours au niveau de cette extrémité aval du canal à double fonction 42, en amont du clapet 78, il est pratiqué un orifice principal de sortie d'air d'antigivrage 80, le mieux visible sur les figures 7a et 7b. Tout comme les orifices de collecte d'air d'antigivrage 68, cet orifice principal 80 est pratiqué à travers la peau interne 24, mais non recouvert par le conduit 64 de manière à ne pas communiquer avec ce dernier. D'ailleurs, il est noté qu'en amont du troisième clapet 66, l'extrémité aval du conduit de collecte d'air d'antigivrage 64 présente un orifice secondaire de sortie d'air d'antigivrage 82, le mieux visible sur la figure 7a. La ségrégation entre les orifices de sortie 80, 82 permet d'éviter que l'air d'antigivrage circule essentiellement à travers le canal multiperforé 42 à double fonction, et ce au détriment de la circulation de l'air dans les canaux d'antigivrage 44. En effet, il est préférentiellement prévu que l'orifice principal 80 présente une section plus faible que celle de l'orifice secondaire 82. Durant les phases d'antigivrage, cela provoque une augmentation de pression au sein du canal à double fonction 42, et favorise ainsi une meilleure répartition de l'air d'antigivrage entre le canal à double fonction 42 d'une part, et les canaux d'antigivrage 44 d'autre part. D'ailleurs, il est noté que pour augmenter la pression d'air au sein du canal à double fonction 42, il est aussi préférentiellement fait en sorte que la section de l'orifice d'entrée d'air d'antigivrage 52 soit supérieure à la section de l'orifice principal de sortie d'air d'antigivrage 80, situé à l'extrémité opposée sur ce même canal.

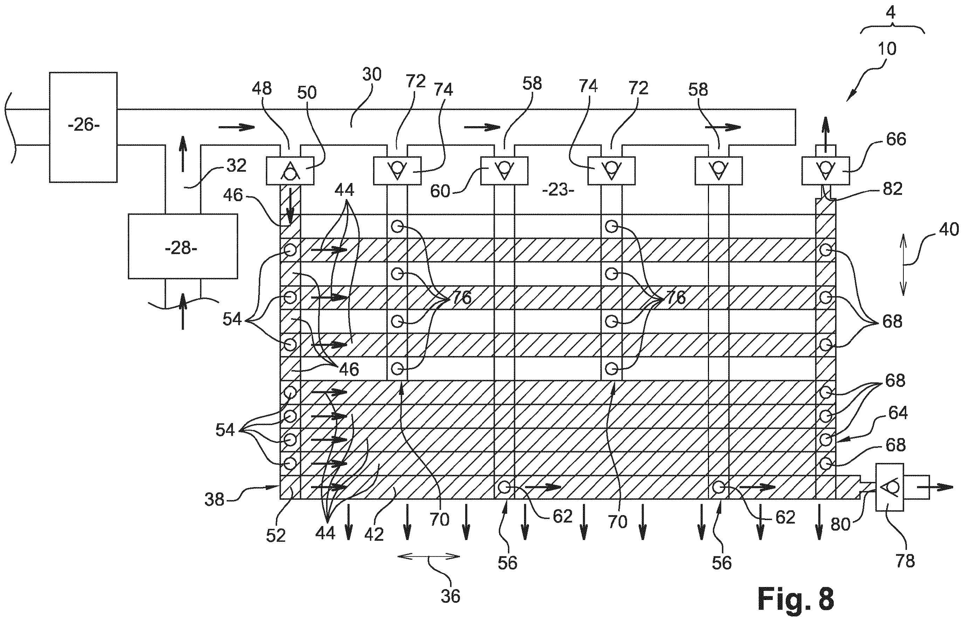

En référence aux figures 8 à 10, il est représenté le fonctionnement du système 20 lors d'une phase d'antigivrage de la partie avant 10 de l'aile 4. Sur ces figures, les flèches symbolisent la direction de circulation de l'air à travers les différents éléments du système. De plus, les zones grisées et hachurées correspondent aux zones empruntées par l'air d'antigivrage.

Pour activer la fonction d'antigivrage, la vanne WAIV 28 est commandée de manière à laisser circuler de l'air chaud provenant des moteurs, à travers la conduite principale 30. L'air transite ensuite par le premier clapet 50 avant de rejoindre le conduit d'admission d'air d'antigivrage 38, à partir duquel cet air chaud est distribué dans le canal à double fonction 42 via l'orifice 52, et dans les canaux d'antigivrage 44 via les orifices 54. A la sortie de ces canaux 44, l'air d'antigivrage est collecté par le conduit 64 via les orifices 68, puis l'air est éjecté dans l'espace libre 23 par le troisième clapet 66. Le réchauffement de la peau externe 22 s'effectue donc par convection au niveau des canaux d'antigivrage 44, et par simple conduction au niveau des canaux d'aspiration adjacents 46.

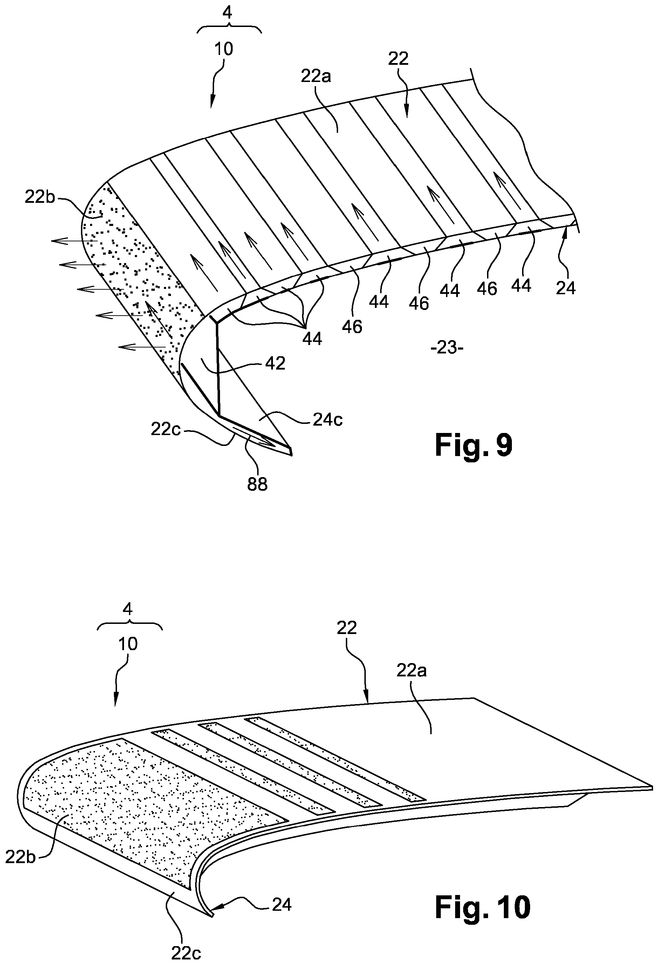

Depuis le conduit 38, l'air chaud circule également à travers le canal à double fonction 42, après avoir emprunté l'orifice 52. Il est ensuite évacué par le cinquième clapet 78. Au cours de sa circulation à travers le canal 42, l'air d'antigivrage est également partiellement évacué par la multiperforation sur la zone de nez 22b de la peau externe 22, et par des fentes prévues entre les zones plaquées d'extrados 22c, 24c, comme cela a été schématisé par la flèche 88 sur la figure 9.

Au cours de cette phase d'antigivrage, comme évoqué précédemment, l'air occupant les conduits 56 ne peut pénétrer au sein de la conduite principale 30 via les clapets 60, en raison de la pression d'air supérieure régnant au sein de cette conduite 30 obturée à son extrémité aval. De plus, les canaux 46 d'aspiration de la couche limite ne sont pas alimentés en air chaud, donc restent inopérants durant cette phase d'antigivrage.

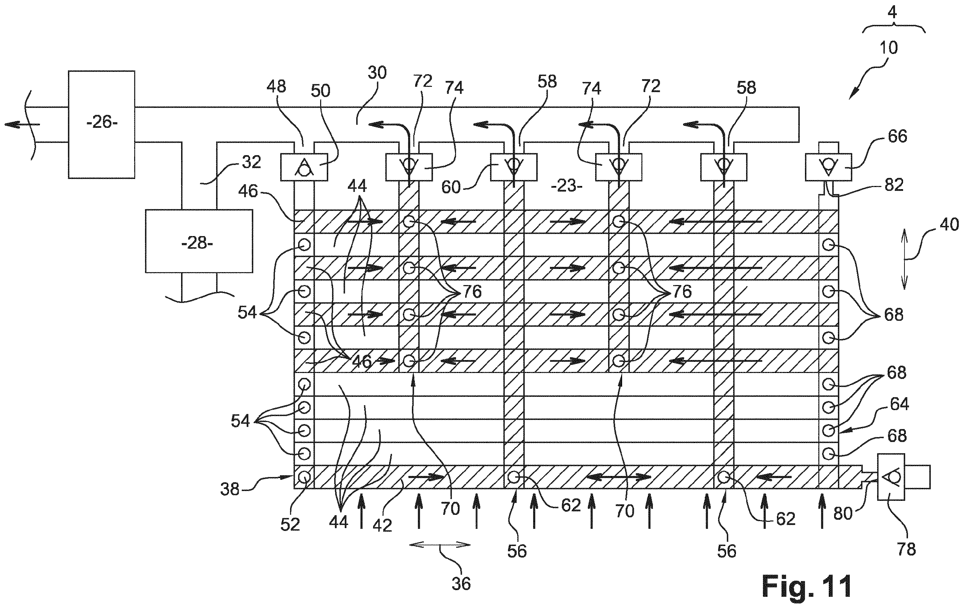

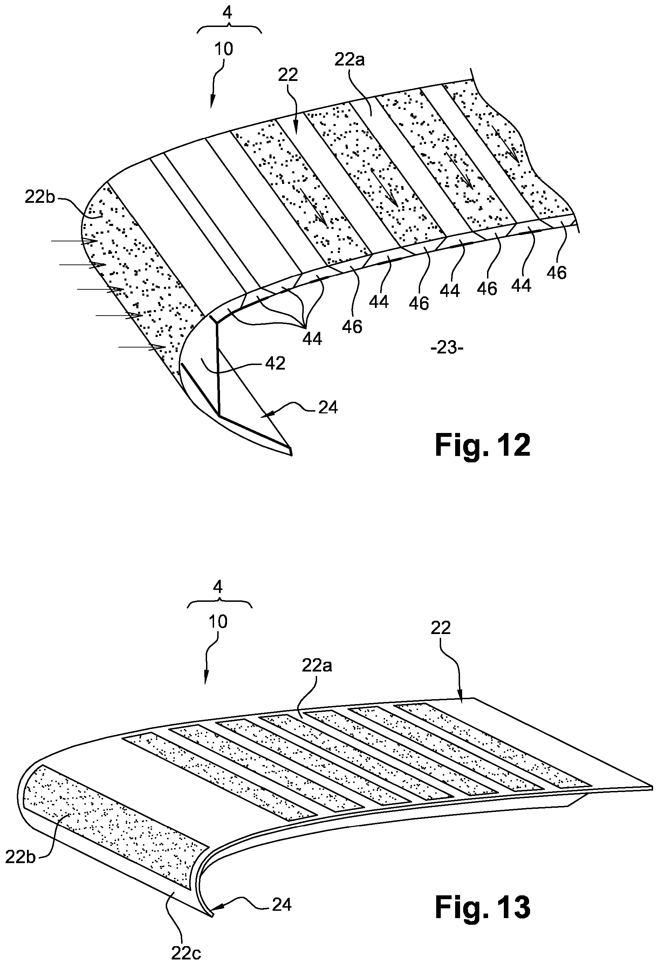

En référence aux figures 11 à 13, il est représenté le fonctionnement du système 20 lors d'une phase d'aspiration de la couche limite sur la partie avant 10 de l'aile 4. Sur ces figures, les flèches symbolisent la direction de circulation de l'air aspiré à travers les différents éléments du système. De plus, les zones grisées et hachurées correspondent aux zones empruntées par l'air d'aspiration.

Pour activer la fonction d'aspiration de la couche limite, la vanne 26 est commandée de manière à aspirer de l'air par la conduite principale 30.

En amont, l'aspiration s'effectue tout d'abord au niveau de la multiperforation du canal à double fonction 42, par la zone de nez 22b. Cet air rejoint ensuite les conduits 56 via les orifices 62, puis pénètre dans la conduite principale 30 après avoir transité par les clapets 60.

L'aspiration s'effectue également par les multiperforations des canaux d'aspiration 46, au niveau de la zone d'extrados 22a de la peau externe 22. L'air circulant dans les canaux 46 rejoint ensuite les conduits 70 via les orifices 76, puis pénètre dans la conduite principale 30 après avoir transité par les clapets 74.

Durant cette phase d'aspiration de la couche limite, puisque les canaux d'antigivrage 44 ne sont pas multiperforés, ils restent inopérants.

Bien entendu, diverses modifications peuvent être apportées par l'homme du métier à l'invention qui vient d'être décrite, uniquement à titre d'exemples non limitatifs. A cet égard, il est noté que la conception décrite ci-dessus est du type « concept longitudinal », avec une circulation de l'air d'antigivrage dite « simple » (de l'anglais « simple flow »). Cette circulation simple implique que l'air d'antigivrage circule d'une extrémité à l'autre de la partie de l'aile concernée par le système, dans un sens unique selon la direction d'envergure. Néanmoins, l'invention s'applique également à une conception longitudinale dans laquelle la circulation de l'air d'antigivrage est dite « centrée » (de l'anglais « center flow »), avec des conduits d'admission d'air d'antigivrage centrés sur la partie de l'aile concernée par le système, et des conduits de collecte d'air d'antigivrage agencés aux extrémités de cette même partie. Dans ce cas de figure, l'air d'antigivrage circule longitudinalement du centre vers les extrémités de l'aile. L'invention s'applique encore à une conception longitudinale dans laquelle la circulation de l'air d'antigivrage s'opère de manière inversée par rapport à la précédente solution (en anglais, dénommée « baseline flow »). Dans ce cas, les conduits de collecte d'air d'antigivrage sont centrés sur la partie de l'aile concernée par le système, et les conduits d'admission d'air d'antigivrage sont agencés aux extrémités de cette même partie. L'air d'antigivrage circule alors longitudinalement des extrémités de l'aile, vers le centre.

Par ailleurs, l'invention s'applique également aux conceptions du type « concept corde », dans lesquelles les canaux suivent non pas la direction d'envergure de l'aile, mais suivent la direction de corde.

Enfin, il est noté qu'une même surface portante telle qu'une aile peut être équipée de plusieurs systèmes tel que celui décrit de manière détaillée ci-dessus. Ces systèmes sont préférentiellement disposés de manière adjacente le long de la direction d'envergure. Ils peuvent alors partager un ou plusieurs éléments, par exemple avoir en commun une même et unique conduite principale 30.

## Revendications

1. Système (20) d'antigivrage et d'aspiration de couche limite, destiné à équiper une surface portante (4) d'un aéronef, le système comprenant au moins un canal à double fonction (42) dans lequel peut alternativement circuler de l'air pour la fonction d'antigivrage et de l'air pour l'aspiration de la couche limite, ledit canal à double fonction étant en partie délimité par une paroi (22b) multiperforée permettant l'aspiration de la couche limite sur ladite surface portante,
le système comprenant en outre:
- un dispositif (26) de contrôle de l'aspiration de la couche limite ;
- un dispositif (28) de contrôle d'antigivrage ;
- une conduite principale (30) à double fonction, à laquelle sont reliés le dispositif (26) de contrôle de l'aspiration de la couche limite, et le dispositif (28) de contrôle d'antigivrage ;
le système étant **caractérisé par**:
- un conduit d'admission d'air d'antigivrage (38) permettant la communication entre la conduite principale (30) et le canal à double fonction (42) ;
- un premier clapet anti-retour (50) autorisant uniquement le passage de l'air d'antigivrage de la conduite principale (30) vers le conduit d'admission d'air d'antigivrage (38) ;
- au moins un conduit de collecte d'air d'aspiration (56) permettant la communication entre le canal à double fonction (42) et la conduite principale (30) ; et
- un second clapet anti-retour (60) autorisant uniquement le passage de l'air d'aspiration du conduit de collecte d'air d'aspiration (56), vers la conduite principale (30).

2. Système selon la revendication 1, **caractérisé en ce qu'**il comporte plusieurs conduits de collecte d'air d'aspiration (56) permettant la communication entre le canal à double fonction (42) et la conduite principale (30), lesdits conduits de collecte d'air d'aspiration (56) étant espacés les uns des autres le long du canal à double fonction (42), et **en ce qu'**il comporte en outre, associé à chaque conduit de collecte d'air d'aspiration (56), un second clapet anti-retour (60) autorisant uniquement le passage de l'air d'aspiration du conduit de collecte d'air d'aspiration (56), vers la conduite principale (30).

3. Système selon la revendication 1 ou la revendication 2, **caractérisé en ce qu'**il comporte de plus :
- une pluralité de canaux d'antigivrage (44), chaque canal d'antigivrage communiquant avec le conduit d'admission d'air d'antigivrage (38) ;
- un conduit de collecte d'air d'antigivrage (64) communiquant avec les canaux d'antigivrage (44) ;
- un troisième clapet anti-retour (66) autorisant uniquement le passage de l'air d'antigivrage de l'intérieur vers l'extérieur du conduit de collecte d'air d'antigivrage (64) ;
- une pluralité de canaux d'aspiration de la couche limite (46), chaque canal d'aspiration (46) étant en partie délimité par une paroi multiperforée (22a) permettant l'aspiration de la couche limite sur ladite surface portante ;
- au moins un conduit secondaire de collecte d'air d'aspiration (70) permettant la communication entre les canaux d'aspiration de la couche limite (46), et la conduite principale (30) ; et
- un quatrième clapet anti-retour (74) autorisant uniquement le passage de l'air d'aspiration du conduit secondaire de collecte d'air d'aspiration (70), vers la conduite principale (30).

4. Système selon la revendication 3, **caractérisé en ce qu'**il comprend plusieurs conduits secondaires de collecte d'air d'aspiration (70) permettant la communication entre les canaux d'aspiration de la couche limite (46), les conduits secondaires de collecte d'air d'aspiration (70) étant espacés les uns des autres le long des canaux d'aspiration (46), et **en ce qu'**il comporte en outre, associé à chaque conduit secondaire de collecte d'air d'aspiration (70), un quatrième clapet anti-retour (74) autorisant uniquement le passage de l'air d'aspiration du conduit secondaire de collecte d'air d'aspiration (70), vers la conduite principale (30).

5. Système selon la revendication 3 ou la revendication 4, **caractérisé en ce qu'**au moins certains des canaux d'antigivrage (44) et des canaux d'aspiration de la couche limite (46) sont agencés en alternance.

6. Système selon l'une quelconque des revendications 3 à 5, **caractérisé en ce qu'**il comprend successivement, dans une direction de corde (40) à partir d'un bord d'attaque de la surface portante :
- ledit canal à double fonction (42) ;
- une pluralité desdits canaux d'antigivrage (44) ; puis
- une alternance entre lesdits canaux d'aspiration d'air (46) et les autres canaux d'antigivrage (44),
lesdits canaux d'antigivrage (44), lesdits canaux d'aspiration (46) et ledit canal à double fonction (42) s'étendant parallèlement les uns aux autres, selon une direction d'envergure (36) de la surface portante.

7. Système selon l'une quelconque des revendications 3 à 6, **caractérisé en ce que** le conduit d'admission d'air d'antigivrage (38), chaque conduit de collecte d'air d'aspiration (56), chaque conduit secondaire de collecte d'air d'aspiration (70) et le conduit de collecte d'air d'antigivrage (64) suivent chacun le profil aérodynamique de la surface portante, en étant agencés dans des plans parallèles, espacés les uns des autres selon une direction d'envergure (36) de cette surface portante.

8. Système selon l'une quelconque des revendications 3 à 7 **caractérisé en ce qu'**il comporte un cinquième clapet anti-retour (78) raccordé à l'extrémité aval du canal à double fonction (42), selon le sens de circulation de l'air d'antigivrage à travers ce canal à double fonction, le cinquième clapet anti-retour (78) autorisant uniquement le passage de l'air d'antigivrage de l'intérieur vers l'extérieur du canal à double fonction (42).

9. Système selon la revendication précédente combinée à la revendication 3, **caractérisé en ce qu'**il est configuré de sorte que l'air d'antigivrage s'échappant par le cinquième clapet (78) ne circule pas à travers le conduit de collecte d'air d'antigivrage (64).

10. Système selon la revendication précédente, **caractérisé en ce que** le canal à double fonction (42) présente un orifice principal de sortie d'air d'antigivrage (80) associé au cinquième clapet (78), **en ce que** le conduit de collecte d'air d'antigivrage (64) présente un orifice secondaire de sortie d'air d'antigivrage (82) associé au troisième clapet (66), et **en ce que** l'orifice principal (80) présente une section plus faible que l'orifice secondaire (82).

11. Système selon la revendication précédente, **caractérisé en ce que** le canal à double fonction (42) présente un orifice d'entrée d'air d'antigivrage (52), dont la section est plus importante que celle de l'orifice principal de sortie d'air d'antigivrage (80).

12. Système selon l'une quelconque des revendications précédentes, **caractérisé en ce que** la conduite principale (30) à double fonction s'étend selon une direction d'envergure (36) de la surface portante.

13. Surface portante (4) pour aéronef comprenant au moins un système (20) d'antigivrage et d'aspiration de couche limite selon l'une quelconque des revendications précédentes.

14. Surface portante selon la revendication précédente, **caractérisée en ce qu'**elle est une aile (4) ou un empennage (6, 7).

15. Aéronef (1) comprenant au moins une surface portante (4) selon l'une quelconque des revendications 13 et 14, ou au moins un système (20) d'antigivrage et d'aspiration de couche limite selon l'une quelconque des 1 à 12.

## Patentansprüche

1. System (20) zum Vereisungsschutz und zur Grenzschichtabsaugung, das dazu bestimmt ist, eine Tragfläche (4) eines Luftfahrzeugs auszustatten, wobei das System mindestens einen Kanal mit Doppelfunktion (42) aufweist, in dem abwechselnd Luft für die Vereisungsschutzfunktion und Luft zum Absaugen der Grenzschicht zirkulieren kann, wobei der Kanal mit Doppelfunktion teilweise durch eine mehrfach perforierte Wand (22b) begrenzt ist, die das Absaugen der Grenzschicht auf der Tragfläche ermöglicht,
wobei das Verfahren ferner aufweist:
- eine Vorrichtung (26) zum Steuern des Absaugens der Grenzschicht,
- eine Vorrichtung (28) zum Steuern des Vereisungsschutzes,
- eine Hauptleitung (30) mit Doppelfunktion, mit der die Vorrichtung (26) zum Steuern des Absaugens der Grenzschicht und die Vorrichtung (28) zum Steuern des Vereisungsschutzes verbunden sind,
wobei das System **gekennzeichnet ist durch**:
- eine Einlassleitung der Vereisungsschutzluft (38), die die Verbindung zwischen der Hauptleitung (30) und dem Kanal mit Doppelfunktion (42) ermöglicht,
- ein erstes Rückschlagventil (50), das nur den Durchgang der Vereisungsschutzluft von der Hauptleitung (30) zu der Einlassleitung der Vereisungsschutzluft (38) ermöglicht,
- eine Absaugluft-Sammelleitung (56), die die Verbindung zwischen dem Kanal mit Doppelfunktion (42) und der Hauptleitung (30) ermöglicht, und
- ein zweites Rückschlagventil (60), das nur den Durchgang der Absaugluft von der Absaugluft-Sammelleitung (56) zu der Hauptleitung (30) ermöglicht.

2. System nach Anspruch 1, **dadurch gekennzeichnet, dass** es mehrere Absaugluft-Sammelleitungen (56) aufweist, die die Verbindung zwischen dem Kanal mit Doppelfunktion (42) und der Hauptleitung (30) ermöglichen, wobei die Absaugluft-Sammelleitungen (56) entlang des Kanals mit Doppelfunktion (42) voneinander beabstandet sind, und dadurch, dass es ferner, verbunden mit jeder Absaugluft-Sammelleitung (56), ein zweites Rückschlagventil (60) aufweist, das nur den Durchgang der Absaugluft von der Absaugluft-Sammelleitung (56) zu der Hauptleitung (30) ermöglicht.

3. System nach Anspruch 1 oder 2, **dadurch gekennzeichnet, dass** es ferner aufweist:
- mehrere Vereisungsschutzkanäle (44), wobei jeder Vereisungsschutzkanal mit der Einlassleitung der Vereisungsschutzluft (38) in Verbindung steht,
- eine Vereisungsschutzluft-Sammelleitung (64), die mit den Vereisungsschutzkanälen (44) in Verbindung steht,
- ein drittes Rückschlagventil (66), das nur den Durchgang der Vereisungsschutzluft vom Inneren zum Äußeren der Vereisungsschutzluft-Sammelleitung (64) ermöglicht,
- mehrere Absaugkanäle der Grenzschicht (46), wobei jeder Absaugkanal (46) teilweise durch eine mehrfach perforierte Wand (22a) begrenzt ist, die das Absaugen der Grenzschicht auf der Tragfläche ermöglicht,
- mindestens eine sekundäre Absaugluft-Sammelleitung (70), die die Verbindung zwischen den Absaugkanälen der Grenzschicht (46) und der Hauptleitung (30) ermöglicht, und
- ein viertes Rückschlagventil (74), das nur den Durchgang der Absaugluft von der sekundären Absaugluft-Sammelleitung (70) zu der Hauptleitung (30) ermöglicht.

4. System nach Anspruch 3, **dadurch gekennzeichnet, dass** es mehrere Absaugluft-Sammelleitungen (70) aufweist, die die Verbindung zwischen den Absaugkanälen der Grenzschicht (46) ermöglichen, wobei die sekundären Absaugluft-Sammelleitungen (70) entlang der Absaugkanäle (46) voneinander beabstandet sind, und dadurch, dass es ferner, verbunden mit jeder sekundären Absaugluft-Sammelleitung (70), ein viertes Rückschlagventil (74) aufweist, das nur den Durchgang der Absaugluft von der sekundären Absaugluft-Sammelleitung (70) zu der Hauptleitung (30) ermöglicht.

5. System nach Anspruch 3 oder Anspruch 4, **dadurch gekennzeichnet, dass** mindestens bestimmte der Vereisungsschutzkanäle (44) und der Absaugkanäle der Grenzschicht (46) abwechselnd angeordnet sind.

6. System nach einem der Ansprüche 3 bis 5, **dadurch gekennzeichnet, dass** es nacheinander in Flügeltiefenrichtung (40) von einer Vorderkante der Tragfläche aufweist:
- den Kanal mit Doppelfunktion (42),
- mehrere Vereisungsschutzkanäle (44) und dann
- einen Wechsel zwischen den Luftabsaugkanälen (46) und den anderen Vereisungsschutzkanälen (44), wobei sich die Vereisungsschutzkanäle (44), die Absaugkanäle (46) und der Kanal mit Doppelfunktion (42) parallel zueinander in Spannweitenrichtung (36) der Tragfläche erstrecken.

7. System nach einem der Ansprüche 3 bis 6, **dadurch gekennzeichnet, dass** die Einlassleitung der Vereisungsschutzluft (38), jede Absaugluft-Sammelleitung (56), jede sekundäre Absaugluft-Sammelleitung (70) und die Vereisungsschutzluft-Sammelleitung (64) jeweils dem aerodynamischen Profil der Tragfläche folgen, wobei sie in parallelen Ebenen angeordnet sind, die voneinander in Spannweitenrichtung (36) dieser Tragfläche beabstandet sind.

8. System nach einem der Ansprüche 3 bis 7, **dadurch gekennzeichnet, dass** es ein fünftes Rückschlagventil (78) aufweist, das an dem stromabwärtigen Ende des Kanals mit Doppelfunktion (42) entlang der Strömungsrichtung der Vereisungsschutzluft durch diesen Kanal mit Doppelfunktion angeschlossen ist, wobei das fünfte Rückschlagventil (78) nur den Durchgang der Vereisungsschutzluft vom Inneren zum Äußeren des Kanals mit Doppelfunktion (42) ermöglicht.

9. System nach dem vorhergehenden Anspruch in Kombination mit Anspruch 3, **dadurch gekennzeichnet, dass** es derart konfiguriert ist, dass die Vereisungsschutzluft, die aus dem fünften Rückschlagventil (78) entweicht, nicht mehr durch die Vereisungsschutzluft-Sammelleitung (64) strömt.

10. System nach dem vorhergehenden Anspruch, **dadurch gekennzeichnet, dass** der Kanal mit Doppelfunktion (42) eine Hauptaustrittsöffnung der Vereisungsschutzluft (80) aufweist, die mit dem fünften Rückschlagventil (78) verbunden ist, und dadurch, dass die Vereisungsschutzluft-Sammelleitung (64) eine sekundäre Austrittsöffnung der Vereisungsschutzluft (82) aufweist, die mit dem dritten Ventil (66) verbunden ist, und dadurch, dass die Hauptöffnung (80) einen kleineren Querschnitt als die sekundäre Öffnung (82) aufweist.

11. System nach dem vorhergehenden Anspruch, **dadurch gekennzeichnet, dass** der Kanal mit Doppelfunktion (42) eine Eintrittsöffnung der Vereisungsschutzluft (52) aufweist, deren Querschnitt größer als jener der Hauptaustrittsöffnung der Vereisungsschutzluft (80) ist.

12. System nach einem der vorhergehenden Ansprüche, **dadurch gekennzeichnet, dass** sich die Hauptleitung (30) mit Doppelfunktion in Spannweitenrichtung (36) der Tragfläche erstreckt.

13. Tragfläche (4) für ein Luftfahrzeug, umfassend mindestens ein System (20) zum Vereisungsschutz und zur Grenzschichtabsaugung nach einem der vorhergehenden Ansprüche.

14. Tragfläche nach dem vorhergehenden Anspruch, **dadurch gekennzeichnet, dass** sie ein Flügel (4) oder ein Leitwerk (6, 7) ist.

15. Luftfahrzeug (1), umfassend mindestens eine Tragfläche (4) nach einem der Ansprüche 13 und 14 oder mindestens ein System (20) zum Vereisungsschutz und zur Grenzschichtabsaugung nach einem der Ansprüche 1 bis 12.

## Claims

1. Anti-icing and boundary-layer suction system (20), intended to be provided on an aerofoil (4) of an aircraft, with the system comprising at least one double-function channel (42) wherein can alternatively circulate air for the anti-icing function and air for boundary-layer suction, said double-function channel being partially delimited by a multiperforated wall (22b) allowing for the suction of the boundary layer on said aerofoil,
with the system further comprising:
- a device (26) for monitoring the suction of the boundary layer;
- a device (28) for monitoring anti-icing;
- a main double-function pipe (30), to which are connected the device (26) for monitoring the suction of the boundary layer, and the device (28) for monitoring anti-icing;
the system being characterize by:
- an anti-icing air-intake pipe (38) allowing for the communication between the main pipe (30) and the double-function channel (42);
- a first non-return valve (50) enabling the anti-icing air to go only from the main pipe (30) to the anti-icing air-intake pipe (38);
- at least one suction-air collection pipe (56) enabling the communication between the double-function channel (42) and the main pipe (30); and
- a second non-return valve (60) enabling the suction air to go from the suction-air collection pipe (56), to the main pipe (30).

2. System according to claim 1, **characterised in that** it comprises several suction air collection pipes (56) enabling the communication between the double-function channel (42) and the main pipe (30), said suction air collection pipes (56) being spaced apart from one another along the double-function channel (42), and **in that** it further comprises, associated with each suction-air collection pipe (56), a second non-return valve (60) enabling the suction air to go only from the suction-air collection pipe (56), to the main pipe (30).

3. System according to claim 1 or claim 2, **characterised in that** it comprises in addition:
- a plurality of anti-icing channels (44), with each anti-icing channel communicating with the anti-icing air-intake pipe (38);
- an anti-icing air collection pipe (64) communicating with the anti-icing channels (44);
- a third non-return valve (66) authorising the anti-icing air to go only from the inside to the outside of the anti-icing air collection pipe (64);
- a plurality of boundary-layer suction channels (46), with each suction channel (46) being partially delimited by a multiperforated wall (22a) allowing for the suction of the boundary layer on said aerofoil;
- at least one suction air collection secondary pipe (70) allowing for the communication between the suction channels of the boundary layer (46), and the main pipe (30); and
- a fourth non-return valve (74) enabling the suction air to go from the suction air collection secondary pipe (70), to the main pipe (30).

4. System according to claim 3, **characterised in that** it comprises several suction air collection secondary pipes (70) allowing for the communication between the suction channels of the boundary layer (46), with the suction air collection secondary pipes (70) being spaced apart from one another along the suction channels (46), and **in that** it further comprises, associated with each suction air collection secondary pipe (70), a fourth non-return valve (74) enabling the suction air to go only from the suction air collection secondary pipe (70), to the main pipe (30).

5. System according to claim 3 or claim 4, **characterised in that** at least some of the anti-icing channels (44) and of the boundary-layer suction channels (46) are arranged alternately.

6. System according to any of claims 3 to 5, **characterised in that** it successively comprises, in a chord direction (40) starting from a leading edge of the aerofoil:
- said double-function channel (42);
- a plurality of said anti-icing channels (44); then
- an alternating between said air suction channels (46) and the other anti-icing channels (44),
said anti-icing channels (44), said suction channels (46) and said double-function channel (42) extending in parallel to one another, according to a spanwise direction (36) of the aerofoil.

7. System according to any of claims 3 to 6, **characterised in that** the anti-icing air-intake pipe (38), each suction-air collection pipe (56), each suction air collection secondary pipe (70) and the anti-icing air collection pipe (64) each follow the aerodynamic profile of the aerofoil, by being arranged in parallel planes, spaced apart from one another according to a spanwise direction (36) of this aerofoil.

8. System as claimed in any claim 3 to 7, **characterised in that** it comprises a fifth non-return valve (78) connected to the downstream end of the double-function channel (42), according to the direction of circulation of the anti-icing air through this double-function channel, the fifth non-return valve (78) enabling the anti-icing air to go only from the inside to the outside of the double-function channel (42).

9. System as claimed in the preceding claim combined with claim 3, **characterised in that** it is configured in such a way that the anti-icing air escaping through the fifth valve (78) does not circulate through the anti-icing air collection pipe (64).

10. System as claimed in the preceding claim, **characterised in that** the double-function channel (42) has an anti-icing air main outlet orifice (80) associated with the fifth valve (78), **in that** the anti-icing air collection pipe (64) has an anti-icing air secondary outlet orifice (82) associated with the third valve (66), and **in that** the main orifice (80) has a smaller section than the secondary orifice (82).

11. System as claimed in the preceding claim, **characterised in that** the double-function channel (42) has an anti-icing air inlet orifice (52), of which the section is greater than that of the anti-icing air main outlet orifice (80).

12. System as claimed in any preceding claim, **characterised in that** the main double-function pipe (30) extends according to a spanwise direction (36) of the aerofoil.

13. Aerofoil (4) for aircraft comprising at least one anti-icing and boundary-layer suction system (20) as claimed in any preceding claim.

14. Aerofoil as claimed in the preceding claim, **characterised in that** it is a wing (4) or an empennage (6, 7).

15. Aircraft (1) comprising at least one aerofoil (4) according to any of claims 13 and 14, or at least one anti-icing and boundary-layer suction (20) system according to any one of claims 1 to 12.
